# EUROPEAN PATENT SPECIFICATION

(11) **EP 3 199 308 B1**
(45) Date of publication and mention of the grant of the patent: **25.03.2020**
(21) Application number: 16153512.5
(22) Date of filing: 29.01.2016
(51) Int. Cl.: B26B 13/16, A01G 3/02

(54) **CUTTING TOOL WITH CONTROL DEVICE**
SCHNEIDWERKZEUG MIT STEUERUNGSVORRICHTUNG
OUTIL DE COUPE AVEC DISPOSITIF DE COMMANDE

(43) Date of publication of application: 02.08.2017
(73) Proprietor: Bor Sheng Industrial Co., Ltd., Taichung (TW)
(72) Inventor: Lin, Shih-Chang, Taichung City (TW)
(74) Representative: Lang, Christian

(56) References cited:
- DE-U1-202011 001 521
- DE-U1-202011 051 328
- US-A- 5 774 991
- US-A1- 2015 040 407
- US-B1- 6 446 344

## Description

### BACKGROUND OF THE INVENTION

### Field of the invention

The present invention relates to a cutting tool, especially to a control device of a cutting tool that controls the cutting tool to perform multi-stage cutting and locks a blade of the cutting tool at a closed position while the cutting tool is not in use.

### Description of Related Art

Generally, the stem of plants is hard and thick so that the stem requires training. The cutting tools/gardening shears for training should have sharp blades. For labor saving during operation of the cutting tool, a multi-stage cutting tool is available. Moreover, a cutting tool able to control cutting modes such as the one revealed in Taiwanese Patent No. M420981 is also available. Pruning shears revealed can be switched to a cutting mode focused on training of branches. The pruning shears includes a first handle and a second handle pivotally connected which users can hold and apply their forces to. A blade unit is pivotally connected to a front end of the first handle and is corresponding to a blunt part on arranged at the front end of the first handle. A drive rod is pivotally connected to the second handle. One end of the drive rod is movably connected to a rear end of the blade unit for pushing the blade to perform cutting. A switch element with a movable and linear structure is set on the second handle. The switch element is able to move linearly to become leaning against the blade unit or move in the opposite direction to get away from the blade unit. A safety fastener is disposed on the second handle for locking an operating piece of the blade unit when the pruning shears is in a closed position.

The switch element is used to control the cutting mode while the safety fastener is used to lock the operating piece of the blade unit. They are arranged at the second handle and separated from each other. The switch element is moved horizontally for pushing the blade unit while the safety fastener is worked in a pendulum manner.

Thus users need to operate two parts at the same time for control of the cutting mode or changing the pruning shears to the closed position. The design causes inconvenience to users. Moreover, both assembly cost and component cost are increased.

From DE 20 2011 051 328 U1 a cutting tool is known which comprises a control element and a locking element. The control element is for switching between a one-stage cutting mode and a multi-stage cutting mode. The control element is slidably disposed in a receiving space formed in one of the handles of the cutting tool such that it can be moved along the handle and below a part of the blade extending between the handles, thereby disabling the multi-stage cutting mode. The locking element is for locking the blade of the cutting tool in a closed position. The locking element is pivotably mounted on the side walls of a handle such that the it can be pivoted in the direction of the blade for locking the same by engaging the part of the blade extending between the handles.

From US 2015/0040407 A1 a cutting tool is known which possesses a locking element for locking the blade of the cutting tool. The locking element is slidably arranged in a receiving space of a handle of the cutting tool and can be moved along the handle.

US 6,446,344 B1 discloses a cutting tool with a latching member that is pivotably disposed on a handle of the cutting tool allowing for locking the two blades of the same in a closed position, whereat the latching member does not come into contact with a blade or an extension thereof, but with a receiving member formed on the other handle.

From DE 20 2011 001 521 U1 a cutting tool is known possessing a locking element being movable along a handle of the cutting tool for locking the blade of the same and a control element pivotably connected to a handle of the cutting tool for reducing the stages of the multi-stage cutting mode and limiting the distance between the handles in the open state of the cutting tool.

Finally, US 5,774,991 A discloses a cutting tool comprising a locking element that is pivotably mounted on a handle of the cutting tool, whereat the locking element extends along both side walls of the handle and along its upper surface such that a user can easily lock the two blades of the cutting tool with a thumb of a hand while holding the cutting tool in the same hand.

### SUMMARY OF THE INVENTION

Therefore it is a primary object of the present invention to provide a control device of a cutting tool that switches the cutting tool to different cutting mode with lower cost. Moreover, the control device also provides a locking function.

In order to achieve the above objects, a cutting tool according to one embodiment of the present invention includes a first component and a second component. One end of the first component is extended to form an anvil part. One end of the first component is pivotally connected to a blade. One end of the blade is extended to form a blade handle. The blade handle includes a hollowed-out window and one end thereof is extended to form a pin. The blade and the anvil part are moved for cutting through the first component and the second component due to the pivotally connected first and second components and second components and other overlapped related parts.

The second component includes a first assembly part and a receiving space. The receiving space is formed by a first wall and a second wall, each of which is disposed with a first bulge and a second bulge used for positioning. The present invention features on that the receiving space is mounted with a control device and the control device is pivotally connected to the first wall and the second wall. The control device consists of a pivot part, a first holding part and a second holding part formed by extension of the pivot part, a platform part arranged between the first holding part and the second holding part, and a groove set on the platform part.

A support body is made from metal and having a connection part, a back part formed by extension of the connection part and a hook part formed by extension of one end of the back part. The shape of the connection part is matched with the shape of the groove for being mounted in the groove. The horizontal surface of the back part and the horizontal surface of the platform part are on the same plane while the hook part is projecting from the platform part. The pivot part is mounted into the receiving space. A pivot hole of the pivot part is aligned with pivot holes of the first and the second walls. Thereby the control device is pivotally connected to the second component. The first holding part and the second holding part are pushed and operated on the first wall and the second wall like a pendulum.

The pin of the blade is leaning against the back part of the support body while the first holding part and the second holding part being pushed to the first bulge. Thus the cutting tool is in a cutting mode of one-time cutting. When the first holding part and the second holding part is pushed to the second bulge, the pin of the blade is not leaning against the back part of the support body and the cutting tool is in a multi-stage cutting mode.

Next the first component and the second component are moved toward each other to make the blade and the anvil part become closed. Then the first holding part/the second holding part is pushed and moved to the position between the first bulge and the second bulge. Then the hook part is locked with the pin of the blade and the control device is used to lock the blade and the anvil part at the closed position.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an explosive view of an embodiment according to the present invention;
Fig. 2 is an explosive view of a control device of an embodiment according to the present invention;
Fig. 3 is a longitudinal cross sectional view of a control device of an embodiment according to the present invention;
Fig. 4 is a perspective view of an embodiment according to the present invention;
Fig. 5 is a schematic drawing showing an embodiment in use according to the present invention;
Fig. 6 is another schematic drawing showing the embodiment of Fig. 5 in use according to the present invention;
Fig. 7 is a longitudinal cross sectional view of the embodiment of Fig. 6 according to the present invention;
Fig. 8 is a further schematic drawing showing an embodiment in use according to the present invention;
Fig. 9 is a further schematic drawing showing an embodiment in use according to the present invention;
Fig. 10 is a further schematic drawing showing an embodiment in use according to the present invention.

### DETAILED DESCRIPTION OF THE PREFERRED EMBODIMENT

In order to learn functions and features of the present invention, please refer to the following embodiments with detailed description and the figures.

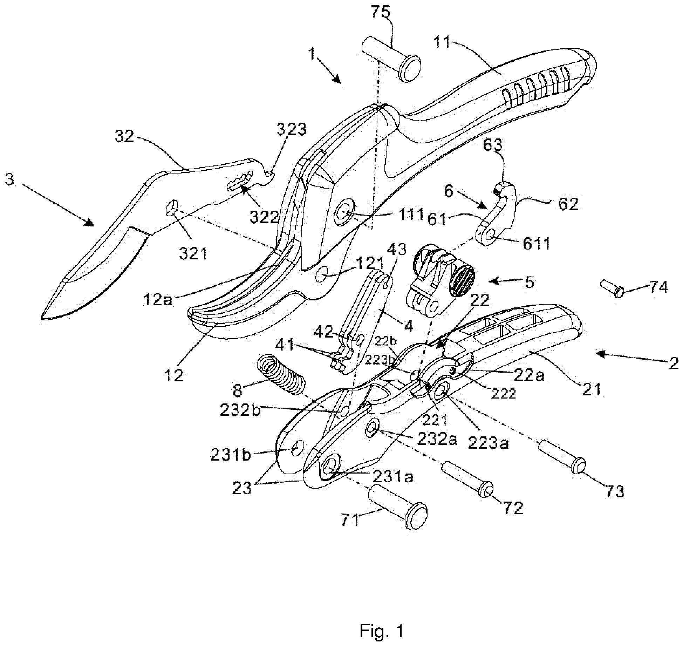

Refer to Fig. 1, Fig. 2 and Fig. 3, a control device of a cutting device includes a first component 1 and a second component 2. The first component 1 consists of a handle 11, an anvil part 12 formed by extension of one end of the handle 11. A slot 12a is longitudinally formed on the anvil part 12 while a first pivot hole 121 is disposed between the handle 11 and the anvil part 12. A second pivot hole 111 is mounted on the handle 11. The second component 2 is composed of a handle part 21, a receiving space 22 and a first assembly part 23. The first assembly part 23 formed by a pair of plates extended from one end of the handle part 21 is arranged with third pivot holes 231a, 231b and fourth pivot holes 232a, 232b. The second pivot hole 111 is used for pivotal connection to a blade 3 and a blade handle 32 formed by extension of one end of the blade 3. An insertion hole 321 and a hollowed-out window 322 are mounted on the blade handle 32 while one end of the blade handle 32 is extended to form a pin 323. The blade handle 32 is passed through the slot 12a of the anvil part 12 and the insertion hole 321 thereof is aligned with and pivotally connected to the second pivot hole 111 by a shaft 75. The first pivot hole 121 is aligned with and pivotally connected to the third pivot holes 231a, 231b by a shaft 71.

Refer to Fig. 1, one end of the handle 21 of the second component 2 is the receiving space 22 formed by a first wall 22a and a second wall 22b. The first wall 22a and the second wall 22b are disposed with a pivot hole 223a, 223b respectively. Both the first wall 22a and the second wall 22b are arranged with first bulge 221 and a second bulge 222. The receiving space 22 is for mounting a control device 5. The control device 5 includes a pivot part 52 with a pivot hole 521, a first holding part 51a and a second holding part 51b formed by extension of the pivot part 52, a platform part 53 between the first holding part 51a and the second holding part 51b, and a groove 54 set on the platform part 53.

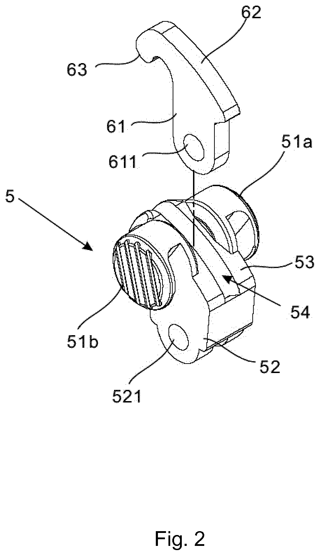

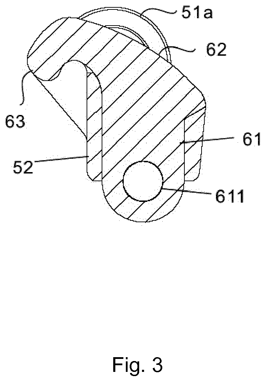

Refer to Fig. 2, a support body 6 made from metal includes a connection part 61 with a pivot hole 611, a back part 62 formed by extension of the connection part 61 and a hook part 63 formed by extension of one end of the back part 62. The pivot hole 611 of the support body 6 is aligned with and assembled with the pivot hole 521 of the pivot part 52. The shape of the connection part 61 is matched with the shape of the groove 54. The horizontal surface of the back part 62 and the horizontal surface of the platform part 53 are on the same plane while the hook part 63 is projecting from the platform part 53 after the support body 6 being mounted into the groove 54, as shown in Fig. 3.

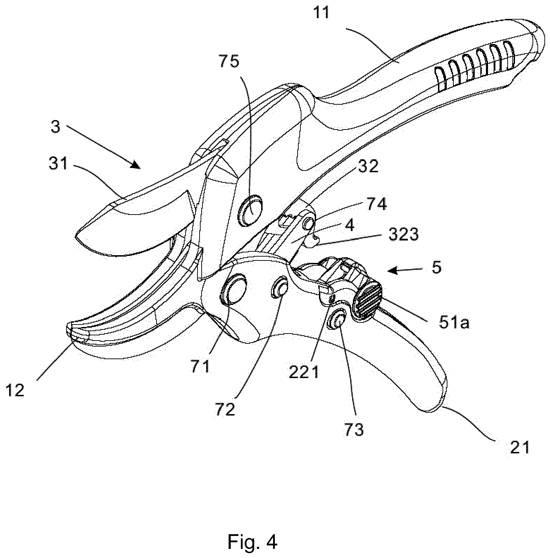

Refer to Fig.1 and Fig. 4, the pivot part 52 is mounted into the receiving space 22. The pivot hole 521 is aligned with the pivot holes 223a, 223b of the first and the second walls 22a, 22b and then pivotally connected to the second component 2 by a shaft 73. Thus the control device 5 is rotatable and stopped within the receiving space 22. The first holding part 51a and the second holding part 51b are respectively leaning against the first wall 22a and the second wall 22b. Thus the control device 5 can be operated like a pendulum.

A connection rod 4 consists of a protruding part 41, a first hole 42 at one end, and a second hole 43 at the other end 43. A spring 8 is fitted on the protruding part 41. The first hole 42 is aligned with the fourth pivot holes 232a, 232b and pivotally connected to the second component 2 by a shaft 72. The second hole 43 is aligned with and pivotally connected to the window 322 of the blade 3 by the shaft 73. Thereby the end part of the connection rod 4 with the second hole 43 can be moved a certain distance within the window 322.

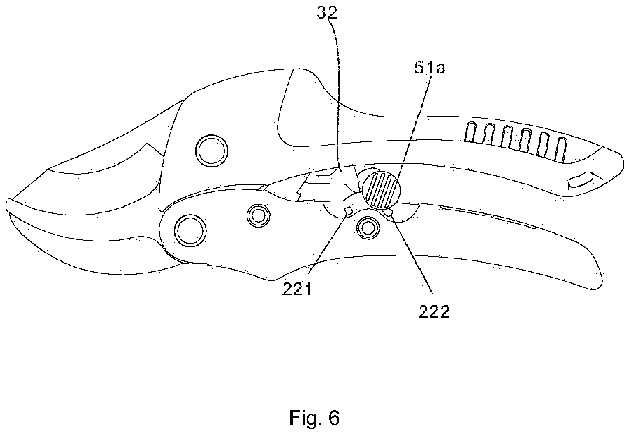

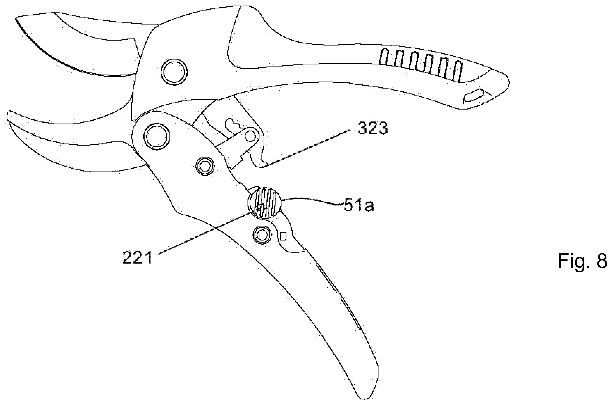

Refer to Fig. 1 and Fig. 4, a part of the anvil part 12 of the first component 1 with the first pivot hole 121 is set into the first assembly part 23 and the first pivot hole 121 is aligned with the third pivot holes 231a, 231b of the second component 2. The shaft 71 is passed through and pivotally connected the third pivot hole 231a, the first pivot hole 121, the insertion hole 321 and the third pivot hole 231b. By the above pivotally connected first and second components and other overlapped related parts, the blade 3 and the anvil part 12 are moved for cutting through the first component 1 and the second component 2. Refer to Fig. 8, the blade 3 and the anvil part 12 are in an open position and ready for cutting. As shown in Fig. 6, the blade 3 and the anvil part 12 are in a closed position. The first component 1 and the second component 2 are limited and unable to be operated for cutting.

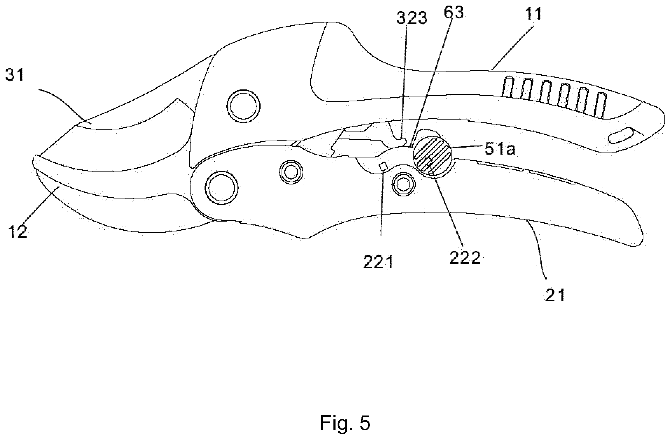

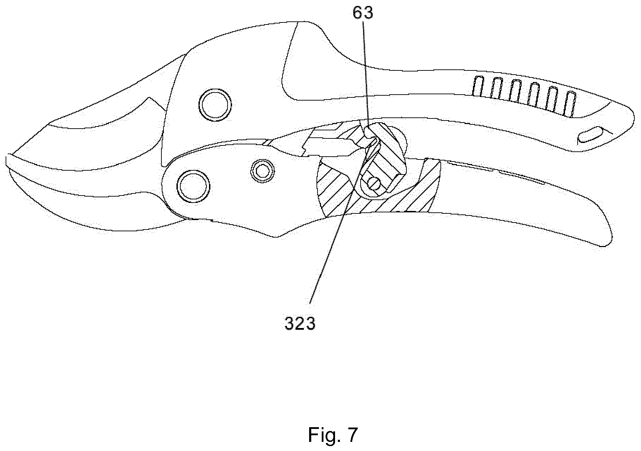

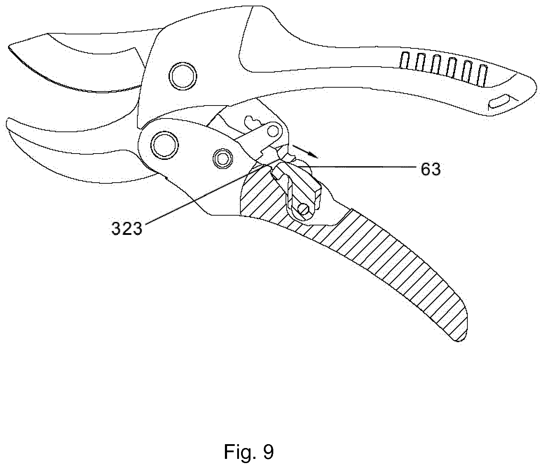

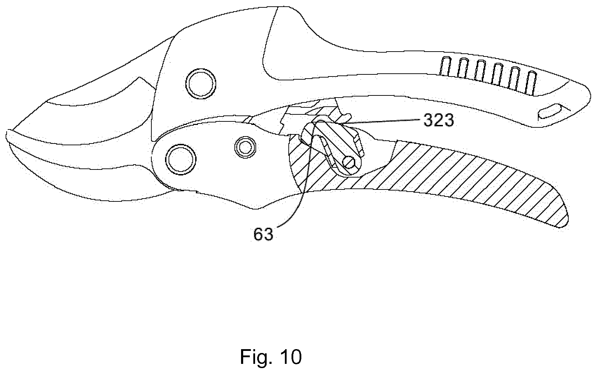

Refer to Fig. 5, Fig. 8, Fig. 9 and Fig. 10, the pin 323 of the blade 3 is leaning against the back part 62 of the support body 6 while the first holding part 51a/the second holding part 51b being pushed to the first bulge 221. Thus the cutting tool is in a cutting mode of one-time cutting. When the first holding part 51a/the second holding part 51b is pushed to the second bulge 222, the pin 323 of the blade 3 is not leaning against the back part 62 of the support body 6 and the cutting tool in a multi-stage cutting mode can perform multi-stage cutting. Refer to Fig. 7, the blade 3 and the anvil part 12 are getting closer to each other and then becoming closed when the first component 1 and the second component 2 are moved toward each other. Then the first holding part 51a/the second holding part 51b is pushed to move from the second bulge 222 to the position between the first bulge 221 and the second bulge 222. Then the hook part 63 is locked with the pin 323 of the blade 3 and the control device 5 is used to lock the blade 3 and the anvil part 12 at the closed position.

In summary, the present invention has the following advantages.
1. The support body 6 for the control device 5 is made from metal that is hard and wear resistant. Thus the support body 6 will not be worn out when the pin 323 of the blade 3 is leaning against the back part 62 of the support body 6 and still worked normally even after being operated multiple times.
2. The support body 6 for the control device 5 includes the hook part 63 so that the control device 5 can provide a locking function.

Additional advantages and modifications will readily occur to those skilled in the art. Therefore, the invention in its broader aspects is not limited to the specific details, and representative devices shown and described herein. Accordingly, various modifications may be made without departing from the scope of the general inventive concept as defined by the appended claims.

## Claims

1. A cutting tool comprising:
a first component (1) and a second component (2) pivotally connected to each other and being operated for performing cutting; and
a control device (5),
wherein the second component (2) includes a receiving space used for mounting the control device (5);
**characterized in that**
the control device (5) comprises a pivot part (52) with a pivot hole (521), two holding parts (51a, 51b) formed by extension of the pivot part (52), a platform part (53) located between the holding parts (51a, 51b) and a groove (54) set on the platform part (53); and
a support body (6) having a connection part (61), a back part (62) formed by extension of the connection part (61) and a hook part (63) formed by extension of one end of the back part (62);
wherein the support body (6) is made from metal;
a shape of the connection part (61) is matched with a shape of the groove (54) for being mounted in the groove (54); a horizontal surface of the back part (62) and a horizontal surface of the platform part (53) are on the same plane and the hook part (63) is projecting from the platform part (53) after the connection part (61) being mounted into the groove (54); wherein the pivot part (52) is mounted into the receiving space (22) and pivotally connected to the second component (2) by a shaft (73) passed through the pivot hole (521) of the pivot part (52) and the receiving space (22) so that the control device (5) is operated like a pendulum by pushing the holding parts (51a, 51b); thereby the first component (1) and the second component (2) are locked or worked with each other for one-stage cutting or multi-stage cutting under control of the control device (5).

2. The cutting tool according to claim 1, wherein the cutting tool includes a connection rod (4); the first component (1) includes an anvil part (12); the first component (1) is pivotally connected to a blade (3) and one end of the blade (3) is extended to form a blade handle (32) while the blade handle (32) includes an insertion hole (321), a hollowed-out window (322) and a pin (323) formed by extension of one end thereof; the blade handle (32) is passed through the anvil part (12) to be pivotally connected to one end of the first component (1); the second component (2) includes a first assembly part (23) disposed with a pivot hole (231a, 231b) and a receiving space (22); the receiving space (22) is used for mounting the control device (5) and the control device (5) is pivotally connected to the second component (2);
wherein one end of the connection rod (4) is pivotally connected to the second component (4) while the other end thereof is pivotally connected to the window (322) of the blade (3) by a shaft (74) so that an end part of the connection rod (4) pivotally connected by the shaft (74) is able to be moved a certain distance within the window (322); wherein the connection part (61) is aligned with pivot hole (521) of the pivot part (52), and pivotally connected to the second component (2).

3. The cutting tool according to claim 2, wherein the receiving space (22) is formed by a first wall (22a) and a second wall (22b); both the first wall (22a) and the second wall (22b) are disposed with a pivot hole (223a, 223b); the first wall (22a) and the second wall (22b) are arranged with a first bulge (221) and a second bulge (222) respectively;
wherein the blade (3) and the anvil part (12) are switched between an open position and a close position for cutting through the first component (1) and the second component (2) pivotally connected to each other;
wherein the pivot part (52) is aligned with the pivot holes (223a, 223b) of the first wall (22a) and the second wall (22b), and pivotally connected to the second component (2) by a shaft (73) so that the control device (5) is rotatable and stopped within the receiving space (22).

4. The cutting toolaccording to claim 1, wherein the holding parts (51a, 51b)correspond to each other.

## Patentansprüche

1. Schneidwerkzeug, umfassend:
eine erste Komponente (1) und eine zweite Komponente (2), die drehbar miteinander verbunden sind und betrieben werden, um einen Schneidevorgang durchzuführen, und
eine Steuerungsvorrichtung (5),
wobei die zweite Komponente (2) einen Aufnahmeraum umfasst, der verwendet wird, um die Steuerungsvorrichtung (5) zu montieren,
**dadurch gekennzeichnet, dass**
die Steuerungsvorrichtung (5) einen Schwenkabschnitt (52) mit einem Lagerloch (521), zwei Halteabschnitte (51a, 51b), die durch eine Verlängerung des Schwenkabschnitts (52) ausgebildet sind, einen Plattformabschnitt (53), der zwischen den Halteabschnitten (51a, 51b) angeordnet ist, und eine Nut (54) umfasst, die an dem Plattformabschnitt (53) angeordnet ist, und
einen Trägerkörper (6), der einen Verbindungsabschnitt (61), einen hinteren Abschnitt (62), der durch eine Verlängerung des Verbindungsabschnitts (61) ausgebildet ist, und einen Hakenabschnitt (63) aufweist, der durch eine Verlängerung eines Endes des hinteren Abschnitts (62) ausgebildet ist,
wobei der Trägerkörper (6) aus Metall hergestellt ist,
wobei eine Form des Verbindungsabschnitts (61) mit einer Form der Nut (54) abgestimmt ist, um in der Nut (54) montiert zu werden, wobei eine horizontale Oberfläche des hinteren Abschnitts (62) und eine horizontale Oberfläche des Plattformabschnitts (53) in derselben Ebene sind und der Hakenabschnitt (63) von dem Plattformabschnitt (53) hervorsteht, nachdem der Verbindungsabschnitt (61) in der Nut (54) montiert ist, wobei der Schwenkabschnitt (52) in dem Aufnahmeraum (22) montiert ist und durch einen Schaft (73) drehbar mit der zweiten Komponente (2) verbunden ist, der durch das Lagerloch (521) des Schwenkabschnitts (52) und den Aufnahmeraum (22) gesteckt ist, so dass die Steuerungsvorrichtung (5) durch das Drücken der Halteabschnitte (51a, 51b) wie ein Pendel betrieben wird, wodurch die erste Komponente (1) und die zweite Komponente (2) verriegelt werden oder für einen einstufigen Schneidevorgang oder einen mehrstufigen Schneidevorgang unter Kontrolle der Steuerungsvorrichtung (5) zusammenwirken.

2. Schneidwerkzeug gemäß Anspruch 1, bei welchem das Schneidwerkzeug eine Verbindungsstange (4) umfasst, wobei die erste Komponente (1) einen Ambossabschnitt (12) umfasst, wobei die erste Komponente (1) drehbar mit einer Klinge (3) verbunden ist und ein Ende der Klinge (3) verlängert ist, um einen Klingengriff (32) auszubilden, wobei der Klingengriff (32) ein Einsteckloch (321), ein ausgehöhltes Fenster (322) und einen Stift (323) umfasst, die durch eine Verlängerung eines Endes davon ausgebildet ist, wobei der Klingengriff (32) durch den Ambossabschnitt (12) gesteckt ist, um drehbar mit einem Ende der ersten Komponente (1) verbunden zu werden, wobei die zweite Komponente (2) ein erstes Montageteil (23) beinhaltet, das mit einem Lagerloch (231a, 231b) und einem Aufnahmeraum (22) ausgestattet ist, wobei der Aufnahmeraum (22) verwendet wird, um die Steuerungsvorrichtung (5) zu montieren und die Steuerungsvorrichtung (5) ist drehbar mit der zweiten Komponente (2) verbunden, wobei ein Ende der Verbindungsstange (4) drehbar mit der zweiten Komponente (4) verbunden ist, während das andere Ende davon drehbar mit dem Fenster (322) der Klinge (3) durch einen Schaft (74) verbunden ist, so dass ein Endabschnitt der Verbindungsstange (4), die durch den Schaft (74) drehbar verbunden ist, in der Lage ist, innerhalb des Fensters (322) um eine gewisse Distanz bewegt zu werden, wobei der Verbindungsabschnitt (61) auf das Lagerloch (521) des Schwenkabschnitts (52) ausgerichtet ist und drehbar mit der zweiten Komponente (2) verbunden ist.

3. Schneidwerkzeug gemäß Anspruch 2, bei welchem der Aufnahmeraum (22) durch eine erste Wand (22a) und eine zweite Wand (22b) ausgebildet ist, wobei sowohl die erste Wand (22a) als auch die zweite Wand (22b) mit einem Lagerloch (223a, 223b) ausgestattet sind, wobei die erste Wand (22a) und die zweite Wand (22b) entsprechend mit einer ersten Auswölbung (221) und einer zweiten Auswölbung (222) ausgestattet sind,
wobei die Klinge (3) und der Ambossabschnitt (12) zwischen einer offenen Position und einer geschlossenen Position geschaltet werden, um durch die erste Komponente (1) und die zweite Komponente (2), die drehbar miteinander verbunden sind, zu schneiden,
wobei der Schwenkabschnitt (52) auf die Lagerlöcher (223a, 223b) der ersten Wand (22a) und der zweiten Wand (22b) ausgerichtet ist und drehbar durch einen Schaft (73) mit der zweiten Komponente (2) verbunden ist, so dass die Steuerungsvorrichtung (5) drehbar ist und innerhalb des Aufnahmeraums (22) gestoppt wird.

4. Schneidwerkzeug gemäß Anspruch 1, bei welchem die Halteabschnitte (51a, 51b) einander entsprechen.

## Revendications

1. Outil de coupe comprenant:
un premier composant (1) et un second composant (2) raccordés à pivotement l'un à l'autre et actionnés pour effectuer une coupe; et
un dispositif de commande (5),
dans lequel le second composant (2) comprend un espace récepteur utilisé pour monter le dispositif de commande (5);
**caractérisé en ce que**:
le dispositif de commande (5) comprend une partie pivotante (52) avec un trou de pivotement (521), deux parties de maintien (51a, 51b) formées par extension de la partie pivotante (52), une partie de plateforme (53) située entre les parties de maintien (51a, 51b) et une rainure (54) ménagée sur la partie de plateforme (53); et
un corps de support (6) ayant une partie de raccordement (61), une partie arrière (62) formée par extension de la partie de raccordement (61) et une partie de crochet (63) formée par extension d'une extrémité de la partie arrière (62);
dans lequel le corps de support (6) est constitué de métal;
une forme de la partie de raccordement (61) concorde avec une forme de la rainure (54) pour être montée dans la rainure (54); une surface horizontale de la partie arrière (62) et une surface horizontale de la partie de plateforme (53) se trouvent sur le même plan et la partie de crochet (63) fait saillie de la partie de plateforme (53) après montage de la partie de raccordement (61) dans la rainure (54); dans lequel la partie pivotante (52) est montée dans l'espace récepteur (22) et raccordée à pivotement au second composant (2) par un arbre (73) passé à travers le trou de pivotement (521) de la partie pivotante (52) et l'espace récepteur (22) de sorte que le dispositif de commande (5) soit actionné comme un pendule par poussée des parties de maintien (51a, 51b); de la sorte, le premier composant (1) et le second composant (2) sont verrouillés ou actionnés l'un avec l'autre pour une coupe en une seule étape ou une coupe en plusieurs étapes sous le contrôle du dispositif de commande (5).

2. Outil de coupe selon la revendication 1, dans lequel l'outil de coupe comprend une tige de raccordement (4); le premier composant (1) comprend une partie d'enclume (12); le premier composant (1) est raccordé à pivotement à une lame (3) et une extrémité de la lame (3) est prolongée pour former une poignée de lame (32) tandis que la poignée de lame (32) comporte un trou d'insertion (321), une fenêtre évidée (322) et une goupille (323) formée par extension d'une de ses extrémités; la poignée de lame (32) est passée à travers la partie d'enclume (12) pour être raccordée à pivotement à une extrémité du premier composant (1); le second composant (2) comprend une première partie d'assemblage (23) disposée avec un trou de pivotement (231a, 231 b) et un espace récepteur (22); l'espace récepteur (22) est utilisé pour monter le dispositif de commande (5) et le dispositif de commande (5) est raccordé à pivotement au second composant (2);
dans lequel une extrémité de la tige de raccordement (4) est raccordée à pivotement au second composant (4) tandis que son autre extrémité est raccordée à pivotement à la fenêtre (322) de la lame (3) par un arbre (74) de sorte qu'une partie d'extrémité de la tige de raccordement (4) raccordée à pivotement par l'arbre (74) soit à même de se déplacer d'une certaine distance dans la fenêtre (322);
dans lequel la partie de raccordement (61) est alignée sur le trou de pivotement (521) de la partie pivotante (52) et raccordée à pivotement au second composant (2).

3. Outil de coupe selon la revendication 2, dans lequel l'espace récepteur (22) est formé par une première paroi (22a) et une seconde paroi (22b); la première paroi (22a) et la seconde paroi (22b) sont toutes deux disposées avec un trou de pivotement (223a, 223b); la première paroi (22a) et la seconde paroi (22b) sont agencées avec un premier renflement (221) et un second renflement (222), respectivement;
dans lequel la lame (3) et la partie d'enclume (12) sont commutées entre une position ouverte et une position fermée pour la coupe via le premier composant (1) et le second composant (2) raccordés à pivotement l'un à l'autre;
dans lequel la partie pivotante (52) est alignée avec les trous de pivotement (223a, 223b) de la première paroi (22a) et de la seconde paroi (22b) et raccordée à pivotement au second composant (2) par un arbre (73) de sorte que le dispositif de commande (5) puisse tourner et s'arrêter dans l'espace récepteur (22).

4. Outil de coupe selon la revendication 1, dans lequel les parties de maintien (51a, 51b) se correspondent l'une l'autre.
